# EUROPEAN PATENT APPLICATION

(11) **EP 4 438 161 A1**
(43) Date of publication of application: **02.10.2024**
(21) Application number: 24163971.5
(22) Date of filing: 15.03.2024
(51) Int. Cl.: B01D 53/94, B01J 23/63, B01J 35/57, B01J 37/02, B01J 37/12, F01N 3/035

(54) **CATALYTIC GASOLINE PARTICULATE FILTER**

(30) Priority: 28.03.2023 US 202363492633 P
(71) Applicant: Johnson Matthey Public Limited Company, London EC4A 4AB (GB)
(72) Inventor: BENET RAJKUMAR, Brenda, Royston, SG8 5HE (GB); CHANDLER, Guy, Royston, SG8 5HE (GB); TURNER, John, Royston, SG8 5HE (GB); LI, Rui, Royston, SG8 5HE (GB); DUNSEATH, Olivia, Reading, RG4 9NH (GB); CORRIGAN, Chris, Royston, SG8 5HE (GB)
(74) Representative: Johnson Matthey Plc

(57) **Abstract**

A washcoat slurry comprising a platinum group metal (PGM) selected from the group consisting of Pt, Pd, Rh and mixtures thereof; an oxygen storage capacity (OSC) material having a D90 in a range of from 1 to 50 µm; an inorganic oxide support; an organic pore former; and a solvent is disclosed. A method for the manufacture of a catalytic gasoline particulate filter for the treatment of an exhaust gas comprises coating a wall-flow filter substrate with the washcoat slurry.

## Description

### FIELD OF THE INVENTION

The present invention relates to a method of providing a catalytic wall-flow filter suitable for use in an emission treatment system, in particular an emission treatment system for a positive ignition internal combustion engine, such as a gasoline spark ignition engine. The present invention provides a method for manufacturing a gasoline particulate filter with improved filtration efficiency and reduced back pressure.

### BACKGROUND OF THE INVENTION

Gasoline particulate filters (GPF) are an emission after-treatment technology for reducing particulate emissions from gasoline direct injection (GDI) engines.

Most early GPF applications included an uncoated GPF positioned downstream of a three-way catalyst (TWC). As the technology matured, GPFs have been also coated with a three-way catalyst. See, for example, US 10,625,243B2, US 2020/0353410A1, US 2019/0168162A1, US 2009/0193796A1. However, the combination of the catalyst coating on a filter body does introduce additional issues such as undue back-pressure.

US2009/0044521A1 discloses an exhaust gas catalyst comprising a support and a plurality of layers formed thereon, wherein at least one of the plurality of layers contains voids therewithin and at least one of the plurality of layers comprises catalyst components.

US2017/0304810A1 discloses a method of coating a substrate with a foam. The method comprises: (a) introducing a foam into a substrate comprising a plurality of channels through open ends of the channels at a first end of the substrate; and (b) optionally applying (i) a vacuum to open ends of the channels at a second end of the substrate and/or (ii) a pressure to the open ends of the channels at the first end of the substrate; wherein the foam comprises a particulate material, and wherein the foam is particle stabilized.

US2022/0280930A1 discloses a method for producing a porous coating on carrier substrates by providing a coating suspension which has at least one inorganic coating material and at least one polymeric organic pore former, characterized in that the polymeric pore former is composed of water-insoluble swollen particles having a water content of 40 wt% to 99.5 wt%, coating the carrier substrate with the coating suspension, and drying and calcining the coated carrier substrate.

US2022/0410129A1 discloses a catalyst washcoat composition comprising a slurry comprising at least one platinum group metal and/or at least one non-platinum group metal supported on at least one support; and at least one pore forming agent having a particle size ranging from 100 nm to 5.0 µm, wherein the pore forming agent is selected from carbon nano-tubes, carbon nano-fibres, activated carbon, resins, cellulose powder, and polymer spheres. US20220410129A1 also teaches a catalyst article for capturing particulate matter comprising a calcined porous washcoat deposited on a substrate, wherein the calcined porous washcoat comprising at least one platinum group metal and/or at least one non-platinum group metal supported on at least one support, wherein the calcined porous washcoat comprises pores of which 50% to100% have a pore size ranging from 100 nm to 5.0 µm, wherein the size of the particulate matter ranges from 1.0 nm to 100 µm.

It is an object of the present invention to provide a catalytic GPF having improved filtration efficiency for particulate matters and improved TWC activity for exhaust gas.

### SUMMARY OF THE INVENTION

One aspect of the present disclosure is directed to a washcoat slurry, comprising: (i) a platinum group metal (PGM) selected from the group consisting of Pt, Pd, Rh and mixtures thereof; (ii) an oxygen storage capacity (OSC) material having a D90 in a range of from 1 to 50 µm; (iii) an inorganic oxide support; (iv) an organic pore former; and (v) a solvent.

Another aspect of the present disclosure is directed to a method for the manufacture of a catalytic gasoline particulate filter (GPF) for the treatment of an exhaust gas, the method comprising:
(i) forming a washcoat slurry comprising: a) a platinum group metal selected from the group consisting of Pt, Pd, Rh and mixtures thereof; b) an oxygen storage capacity (OSC) material having a D90 in a range of from 1 to 50 µm; c) an inorganic oxide support; d) an organic pore former; and e) a solvent;
(ii) coating a wall-flow filter substrate with the washcoat slurry to form a washcoated substrate, the wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face; and
(iii) calcining the washcoated substrate to form a gasoline particulate filter;

Another aspect of the present disclosure is a catalytic gasoline particulate filter (GPF) for exhaust gas from a gasoline engine, the catalytic GPF comprising:
a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
a first TWC coating in the first plurality of channels, the first TWC coating comprising a first PGM composition, a first oxygen storage capacity (OSC) material, and a first inorganic support;
a second TWC coating in the second plurality of channels, the second TWC coating comprising a second PGM composition, a second OSC material, and a second inorganic support;
wherein the first TWC coating is formed by calcining a first washcoat comprising a first organic performer;
wherein the second TWC coating is formed by calcining a second washcoat comprising a second organic performer;
wherein the first TWC coating is coated from the first face;
wherein the second TWC coating is coated from the second face;
wherein the first face is an inlet face and the second face is an outlet face of the catalytic GPF.

Another aspect of the present disclosure is an emission treatment system for treating a flow of a combustion exhaust gas from gasoline direct injection engines, the system comprising the catalytic GPF as disclosed herein. The exhaust system can comprise additional components, such as a TWC catalyst containing a TWC composition applied to a honeycomb flow-through substrate and disposed either upstream or downstream of the catalytic GPF according to the invention.

### DETAILED DESCRIPTION OF THE INVENTION

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

One aspect of the present disclosure is directed to a washcoat slurry comprising: (i) a platinum group metal (PGM) selected from the group consisting of Pt, Pd, Rh and mixtures thereof; (ii) an oxygen storage capacity (OSC) material having a D90 in a range of from 1 to 50 µm; (iii) an inorganic oxide support; (iv) an organic pore former; and (v) a solvent.

The washcoat slurry comprises a PGM selected from the group consisting of Pt, Pd, Rh, and mixtures thereof. Preferably the washcoat slurry comprises Pt and Rh, or, Pd and Rh. For example, the washcoat slurry may comprise Pt and Rh. Alternatively, the washcoat slurry may comprise Pd and Rh. The amount of the total PGM in the washcoat slurry can be from 0.005 to 10 wt%, preferably from 0.001 to 5 wt%, more preferably from 0.05 to 3.0 wt%, relative to the total weight of the washcoat slurry.

The washcoat slurry comprises an oxygen storage capacity (OSC) material. "Oxygen storage capacity" refers to the ability of materials used as oxygen storage capacity material in catalysts to store oxygen at lean conditions and to release it at rich conditions.

The OSC material can be ceria or a mixed oxide comprising ceria. Preferably the OSC material comprises a mixed oxide of cerium and zirconium; a mixed oxide of cerium, zirconium, and aluminium; a mixed oxide of cerium, zirconium, and neodymium; or a mixed oxide of cerium, zirconium and praseodymium. The term "mixed oxide" as used herein generally refers to a mixture of oxides in a single phase, as is conventionally known in the art.

The OSC material has a D90 in a range of from 1 to 50 µm.

Particle size distributions of solid particles can be characterized by the D10, D50 and D90 measurements. In each case the number indicates the percentage amount of particles smaller than the recited value. In other words, a D90 of 1 µm means that 90% of the particles are smaller than 1 µm in diameter. By knowing a D10 and a D90, the range of particles in a distribution of particles can be defined. The characterization of the particle size of a sample by its D10 and D90 values generally defines the breadth of the particle-size distribution. The closer these values are, the narrower the distribution of particle sizes.

The particle size measurements necessary to obtain D10, D50 and D90 values of solid particles such as the OSC material, the inorganic oxide support, and/or the organic pore former can be obtained by Laser Diffraction Particle Size Analysis using a Malvern Mastersizer 3000, which is a volume-based technique (i.e., D50 and D90 may also be referred to as D_{V}50 and D_{V}90 (or D(v,0.50) and D(v,0.90)) and applies a mathematical Mie theory model to determine a particle size distribution. The laser diffraction system works by determining diameters for the particles based on a spherical approximation. For the particle size measurements by Laser Diffraction Particle Size Analysis, diluted samples were prepared by sonication in distilled water without surfactant for 30 seconds at 35 watts.

The OSC material preferably has a D90 in a range of from 2 to 40 µm, more preferably has a D90 in a range of from 3 to 35 µm, and most preferably has a D90 in a range of from 5 to 30 µm.

The OSC material preferably has a D50 in a range of from 0.1 to 30 µm, more preferably has a D50 in a range of from 5 to 10 µm, and most preferably has a D50 in a range of from 1 to 5 µm.

The washcoat slurry comprise an inorganic oxide support. The inorganic oxide support can be an oxide of Groups 2, 3, 4, 5, 13 and 14 elements. The inorganic oxide support is preferably a refractory oxide that exhibits chemical and physical stability at high temperatures, such as the temperatures associated with gasoline engine exhaust. The inorganic oxide support can be selected from the group consisting of alumina, silica, titania, and mixed oxides or composite oxides thereof. More preferably, the inorganic oxide support is an alumina. In one embodiment, the inorganic oxide support is gamma-alumina.

The inorganic oxide support preferably has a D90 of from 5 to 100 µm, more preferably from 10 to 90 µm, most preferably from 15 to 80 µm.

The inorganic oxide support preferably has a D50 of from 0.1 to 20 µm, more preferably from 0.5 to 10 µm, most preferably from 1 to 5 µm.

The OSC material and the inorganic oxide support in the washcoat slurry can have a weight ratio of from 10:1 to 1:10, preferably from 5:1 to 1:5, more preferably from 3:1 to 1:3.

The washcoat slurry comprises a solvent. Water and organic solvents (methanol, ethanol, propanol, and the like) or their mixtures can be used. Preferably, water is used as the solvent.

The washcoat slurry may further comprises a barium component.

The washcoat slurry comprises an organic pore former. The organic pore former may be selected from the group consisting of cellulose powder, cellulose fibres, polyethylene, starch, graphite, carbon, polypropylene, polyaramides, polytetrafluoroethylene, polystyrene, polymethacryl-methacrylate, and mixtures thereof. Commercially available organic pore formers include Arbocel^{®}, Vivapur^{®}, Mipelon^{™} PM-200, Propyltex^{®}, Orgasol^{®}, and Remyrise^{®}.

The organic pore former may have a D50 in a range of from 1 to 30 µm, preferably from 2 to 25 µm, more preferably from 3 to 20 µm, even more preferably from 4 to 18 µm, and most preferably from 6 to 12 µm.

In some embodiments, the organic pore former is a cellulose powder. Preferably, the cellulose powder has a D50 in the range of 6 to 12 µm.

The washcoat slurry may comprise the organic pore former in an amount of from 5 to 40% wt%, preferably from 8 to 35 wt%, more preferably from 10 to 30 wt% relative to the crucible solids in the washcoat slurry.

Another aspect of the present disclosure is directed to a method for the manufacture of a catalytic GPF for the treatment of an exhaust gas, the method comprising:
(i) forming a washcoat slurry comprising: a) a platinum group metal selected from the group consisting of Pt, Pd, Rh and mixtures thereof; b) an oxygen storage capacity (OSC) material having a D90 in a range of from 1 to 50 µm; c) an inorganic oxide support; d) an organic pore former; and e) a solvent;
(ii) coating a wall-flow filter substrate with the washcoat slurry to form a washcoated substrate, the wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face; and
(iii) calcining the washcoated substrate to form the catalytic gasoline particulate filter;

The washcoat slurry is generally prepared by mixing one or more PGM compounds (e.g., palladium nitrate, platinum nitrate, rhodium nitrate, or other salts of PGM), the oxygen storage capacity (OSC) material, the inorganic oxide support, the organic pore former, and a solvent (e.g., water).

The method comprises coating a wall-flow filter substrate with the washcoat slurry to form a washcoated substrate.

The wall-flow filter substrate can be a ceramic, e.g., silicon carbide, cordierite, aluminium nitride, silicon nitride, aluminium titanate, alumina, mullite, pollucite, or composites comprising segments of any two or more thereof. Cordierite, a magnesium aluminosilicate, and silicon carbide are particularly preferred.

The wall-flow filter substrate suitable for use in the present invention typically has a mean pore size of from 8 to 45 µm, for example 8 to 25 µm, or 10 to 20 µm. Pore size is well known in the art and appropriate measurement techniques are known to a person skilled in the art. The wall-flow filter substrate may have a porosity of 40 to 75%, such as 45 to 70%. The mean pore size may be determined using mercury porosimetry and x-ray tomography according to conventional methods.

The techniques for coating a wall-flow filter substrate with the washcoat slurry to form a washcoated substrate is known in the art. One suitable coating procedure is described in WO1999047260. A washcoat slurry can be coated to the wall-flow filter substrate from the the inlet face, from the outlet face, or from both the inlet face and the outlet face.

In some embodiments, a first washcoat slurry is coated from the inlet face of the wall-flow filter substrate to form a first TWC coating in the inlet channel; and a second washcoat slurry is coated from the outlet face of the wall-flow filter substrate to form a second TWC coating in the outlet channel. The first washcoat slurry and the second washcoat slurry may have the same composition. The first TWC coating and the second TWC coating may have the same composition. The "washcoat slurry" described in this disclosure applies to "the first washcoat slurry" and "the second washcoat slurry."

After one or both the first TWC coating and the second TWC coating is applied to the wall-flow filter substrate, it may be preferable to dry and/or calcine the wall-flow filter substrate containing one coating before another coating is applied. Calcining may be preceded by a drying step at a lower temperature (such as 100 to 200°C). Calcining is routine in the art and may be performed under usual conditions.

Another aspect of the present disclosure is a catalytic gasoline particulate filter (GPF) for exhaust gas from a gasoline engine, the catalytic GPF comprising:
a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
a first TWC coating in the first plurality of channels, the first TWC coating comprising a first PGM composition, a first oxygen storage capacity (OSC) material, and a first inorganic support;
a second TWC coating in the second plurality of channels, the second TWC coating comprising a second PGM composition, a second OSC material, and a second inorganic support;
wherein the first TWC coating is formed by calcining a first washcoat comprising a first organic performer;
wherein the second TWC coating is formed by calcining a second washcoat comprising a second organic performer;
wherein the first TWC coating is coated from the first face;
wherein the second TWC coating is coated from the second face;
wherein the first face is an inlet face and the second face is an outlet face of the catalytic GPF.

The first TWC coating may cover from 10% to 90% of the length of the first plurality of channels. The second TWC coating may cover from 10% to 90% of the length of the second plurality of channels. Preferably, the sum of the lengths of the first TWC coating and the second TWC coating is about 100% to 110% of the length of the channels.

Preferably, the first TWC coating covers from 75% to 85% of the length of the first plurality of channels and the second TWC coating covers from 15% to 25% of the second plurality of channels. More preferably, the first TWC coating covers 80% to 85%of the length of the first plurality of channels and the second TWC coating covers 20% to 25% to of the second plurality of channels.

Preferably, the first TWC coating and the second TWC coating are primarily "on-wall".

The first TWC coating loading can be in the range of 0.2 to 2.5 g/in³, preferably 1.0 to 2.0 g/in³. The first TWC coating loading is defined as the weight of the first TWC coating relative to the total volume of the wall-flow filter after calcination.

The second TWC coating loading can be in the range of 0.2 to 2.5 g/in³, preferably 1.0 to 2.0 g/in³.

The first TWC coating may have a total PGM loading in the range of 1 to 40 g/ft³, preferably in the range of 15 to 30 g/ft³, more preferably in the range of 20 to 25 g/ft³.

The second TWC coating may have a total PGM loading in the range of 1 to 40 g/ft³, preferably in the range of 15 to 30 g/ft³, more preferably in the range of 20 to 25 g/ft³.

Another aspect of the present disclosure is an emission treatment system for treating a flow of a combustion exhaust gas from gasoline direct injection engines, the system comprising the catalytic GPF as disclosed herein. The exhaust system can comprise additional components, such as a TWC catalyst containing a TWC composition applied to a honeycomb flow-through substrate and disposed either upstream or downstream of the catalytic GPF according to the invention.

Preferably the exhaust system comprises a TWC catalyst and the catalytic GPF as disclosed herein, wherein the TWC catalyst is upstream of the catalytic GPF.

### COMPARATIVE EXAMPLE 1: GPF-1

A washcoat slurry ("Slurry-A") was prepared by mixing rhodium nitrate, palladium nitrate, a CeZr mixed oxide having a weight ratio of ZrO₂ to CeO₂ of about 2:1 and a D90 of 7 µm, and a La-stabilized alumina component having a D90 of 13 µm, barium hydroxide, and water. The solid content was about 21%.

A cordierite wall-flow filter substrates (5.2x4 inch, 300/8, average mean pore size 15 microns, porosity 65%) was coated with Slurry-A from the inlet face and the outlet face using the coating process described in WO1999/47260. The inlet washcoat length and outlet washcoat length are both about 50-55% of the substrate length. The coated filter substrate was dried at 100 to 100°C after each coating was applied. The coated filter substrate was calcined at 500°C for 1 h. After calcination, the coated filter (GPF-1) had a washcoat loading of 1.6 g/in³ and a total PGM loading of 30 g/ft³ with a Pd:Rh weight ratio of 5:1.

### EXAMPLE 2: GPF-2

A washcoat slurry ("Slurry-B") was prepared by mixing rhodium nitrate, palladium nitrate, a CeZr mixed oxide having a weight ratio of ZrO₂ to CeO₂ of about 2:1 and a D90 of 7 µm, and a La-stabilized alumina component having a D90 of 13 µm, barium hydroxide, and a cellulose powder (D50 about 8 µm; D90 <100 µm), and water. The amount of the cellulose powder was 25% relative to the combined weight of the CeZr mixed oxide and the La-stabilized alumina. The solid content of the washcoat slurry was about 26%.

A cordierite wall-flow filter substrates (5.2x4 inch, 300/8, average mean pore size 15 microns, porosity 65%) was coated with Slurry-B from the inlet face and the outlet face using the coating process described in WO1999/47260. The inlet washcoat length and outlet washcoat length are about 50-55% of the substrate length. The coated filter substrate was dried at 100 to 100°C after each coating was applied. The coated filter substrate was calcined at 500°C for 1 h. After calcination, the coated filter (GPF-2) had a washcoat loading of 1.6 g/in³ and a total PGM loading of 30 g/ft³ with a Pd:Rh weight ratio of 5:1.

### COMPARATIVE EXAMPLE 3: GPF-3

A washcoat slurry ("Slurry-C") was prepared by mixing rhodium nitrate, platinum nitrate, a CeZr mixed oxide having a weight ratio of ZrO₂ to CeO₂ of about 2:1 and a D90 of 7 µm, and a La-stabilized alumina component having a D90 of 13 µm, citric acid, and water. The solid content was about 26%.

A cordierite wall-flow filter substrates (5.2x4 inch, 300/8, average mean pore size 15 microns, porosity 65%) was coated with Slurry-C from the inlet face and the outlet face using the coating process described in WO1999/47260. The inlet washcoat length and outlet washcoat length are both about 50-55% of the substrate length. The coated filter substrate was dried at 100 to 100°C after each coating was applied. The coated filter substrate was calcined at 500°C for 1 h. After calcination, the coated filter (GPF-3) had a washcoat loading of 1.6 g/in³ and a total PGM loading of 30 g/ft³ with a Pt:Rh weight ratio of 5:1

### COMPARATIVE EXAMPLE 4: GPF-4

A cordierite wall-flow filter substrates (5.2x4 inch, 300/8, average mean pore size 15 microns, porosity 65%) was coated with Slurry-C from the inlet face and the outlet face using the coating process described in WO1999/47260. The inlet washcoat length was about 80-85% of the substrate length. The outlet washcoat length was about 20-25% of the substrate length. The coated filter substrate was dried at 100 to 100°C after each coating was applied. The coated filter substrate was calcined at 500°C for 1 h. After calcination, the coated filter (GPF-4) had a washcoat loading of 1.6 g/in³ and a total PGM loading of 30 g/ft³ with a Pt:Rh weight ratio of 5:1.

### EXAMPLE 5: GPF-5

A washcoat slurry ("Slurry-D") was prepared by mixing rhodium nitrate, platinum nitrate, a CeZr mixed oxide having a weight ratio of ZrO₂ to CeO₂ of about 2:1 and a D90 of 7 µm, and a La-stabilized alumina component having a D90 of 13 µm, citric acid, and a cellulose powder (D50 about 8 µm; D90 <100 µm), and water. The amount of the cellulose powder was 12.5% relative to the combined weight of the CeZr mixed oxide and the La-stabilized alumina. The solid content was about 29%.

A cordierite wall-flow filter substrates (5.2x4 inch, 300/8, average mean pore size 15 microns, porosity 65%) was coated with Slurry-D from the inlet face and the outlet face using the coating process described in WO1999/47260. The inlet washcoat length and outlet washcoat length were both about 50-55% of the substrate length. The coated filter substrate was dried at 100 to 100°C after each coating was applied. The coated filter substrate was calcined at 500°C for 1 h. After calcination, the coated filter (GPF-5) had a washcoat loading of 1.6 g/in³ and a total PGM loading of 30 g/ft³ with a Pt:Rh weight ratio of 5:1.

Compared to GPF-3 (prepared without pore former), coating layers of GPF-5 are more uniform in thickness.

### EXAMPLE 6: GPF-6

A cordierite wall-flow filter substrates (5.2x4 inch, 300/8, average mean pore size 15 microns, porosity 65%) was coated with Slurry-D from the inlet face and the outlet face using the coating process described in WO1999/47260. The inlet washcoat length was about 80-85% of the substrate length. The outlet washcoat length are both about 20-25% of the substrate length. The coated filter substrate was dried at 100 to 100°C after each coating was applied. The coated filter substrate was calcined at 500°C for 1 h. After calcination, the coated filter (GPF-6) had a washcoat loading of 1.6 g/in³ and a total PGM loading of 30 g/ft³ with a Pt:Rh weight ratio of 5:1.

### EXAMPLE 7: GPF-7

A washcoat slurry ("Slurry-E") was prepared by mixing rhodium nitrate, platinum nitrate, a CeZr mixed oxide having a weight ratio of ZrO₂ to CeO₂ of about 2:1 and a D90 of 7 µm, and a La-stabilized alumina component having a D90 of 13 µm, citric acid, and a cellulose powder (D50 about 8 µm; D90 <100 µm), and water. The amount of the cellulose powder was 25% relative to the combined weight of the CeZr mixed oxide and the La-stabilized alumina. The solid content was about 33%.

A cordierite wall-flow filter substrates (5.2x4 inch, 300/8, average mean pore size 15 microns, porosity 65%) was coated with Slurry-D from the inlet face and the outlet face using the coating process described in WO1999/47260. The inlet washcoat length and outlet washcoat length were both about 50-55% of the substrate length. The coated filter substrate was dried at 100 to 100°C after each coating was applied. The coated filter substrate was calcined at 500°C for 1 h. After calcination, the coated filter (GPF-7) had a washcoat loading of 1.6 g/in³ and a total PGM loading of 30 g/ft³ with a Pt:Rh weight ratio of 5:1.

### EXAMPLE 8: GPF-8

A cordierite wall-flow filter substrates (5.2x4 inch, 300/8, average mean pore size 15 microns, porosity 65%) was coated with Slurry-E from the inlet face and the outlet face using the coating process described in WO1999/47260. The inlet washcoat length was about 80-85% of the substrate length. The outlet washcoat length was about 20-25% of the substrate length. The coated filter substrate was dried at 100 to 100°C after each coating was applied. The coated filter substrate was calcined at 500°C for 1 h. After calcination, the coated filter (GPF-8) had a washcoat loading of 1.6 g/in³ and a total PGM loading of 30 g/ft³ with a Pt:Rh weight ratio of 5:1.

### COMPARATIVE EXAMPLE 9: GPF-9

A washcoat slurry ("Slurry-F") was prepared by mixing rhodium nitrate, palladium nitrate, a CeZr mixed oxide having a weight ratio of ZrO₂ to CeO₂ of about 3:2 and a D90 of 13 µm, and a La-stabilized alumina component having a D90 of 20 µm, barium hydroxide, and water. The solid content was about 17%.

A cordierite wall-flow filter substrates (5.2x4 inch, 300/8, average mean pore size 15 microns, porosity 65%) was coated with Slurry-F from the inlet face and the outlet face using the coating process described in WO1999/47260. The inlet washcoat length and the outlet washcoat length were both about 50-55% of the substrate length. The coated filter substrate was dried at 100 to 100°C after each coating was applied. The coated filter substrate was calcined at 500°C for 1 h. The The coated filter substrate was calcined at 500°C for 1 h. After calcination, the coated filter (GPF-9) had a washcoat loading of 0.8 g/in³ and a total PGM loading of 15 g/ft³ with a Pd:Rh weight ratio of 4:1.

### EXAMPLE 10: GPF-10

A washcoat slurry ("Slurry-G") was prepared by mixing rhodium nitrate, palladium nitrate, a CeZr mixed oxide having a weight ratio of ZrO₂ to CeO₂ of about 3:2 and a D90 of 13 µm, and a La-stabilized alumina component having a D90 of 20 µm, barium hydroxide, a cellulose powder (D50 about 8 µm; D90 <100 µm), and water. The amount of the cellulose powder was 30% relative to the combined weight of the CeZr mixed oxide and the La-stabilized alumina. The solid content was about 21%.

A cordierite wall-flow filter substrates (5.2x4 inch, 300/8, average mean pore size 15 microns, porosity 65%) was coated with Slurry-G from the inlet face and the outlet face using the coating process described in WO1999/47260. The inlet washcoat length and the outlet washcoat length were both about 50-55% of the substrate length. The coated filter substrate was dried at 100 to 100°C after each coating was applied. The coated filter substrate was calcined at 500°C for 1 h. After calcination, the coated filter (GPF-10) had a washcoat loading of 0.8 g/in³ and a total PGM loading of 15 g/ft³ with a Pd:Rh weight ratio of 4:1.

### EXAMPLE 11: GPF-11

A cordierite wall-flow filter substrates (5.2x4 inch, 300/8, average mean pore size 15 microns, porosity 65%) was coated with Slurry-G from the inlet face and the outlet face using the coating process described in WO1999/47260. The inlet washcoat length was about 80-85% of the substrate length and the outlet washcoat length was about 20-25% of the substrate length. The coated filter substrate was dried at 100 to 100°C after each coating was applied. The coated filter substrate was calcined at 500°C for 1 h. After calcination, the coated filter (GPF-10) had a washcoat loading of 0.8 g/in³ and a total PGM loading of 15 g/ft³ with a Pd:Rh weight ratio of 4:1.

### EXAMPLE 12: PERFORMANCE TEST

GPF-1 to GPF-8 were oven aged at 1050°C for four hours under lean conditions. GPF-9, GPF-10 and GPF-11 were aged at closed couple position behind a TWC catalyst using a single brick lean spike engine ageing cycle with a catalyst inlet temperature setpoint at 950°C for 45 hours. Each filter was installed in an underfloor position on a JLR 2.0LAJ20 P4 engine. Each filter was evaluated over a minimum of three RDE-aggressive cycles with a cold start, measuring reduction in gaseous emissions relative to the reference catalyst. The backpressure differential and the conversion efficiency for gaseous HC, CO and NOx emissions were determined by using sensors mounted upstream and downstream of the filter as well as upstream and downstream of the closed coupled TWC.

Filtration efficiency and article number PN/km testing results from JLR RDE drive cycle testing of 1050 °C hydrothermal aged GPF-1 and GPF-2 are shown in Table 1.

**TABLE 1**

| Filter | Washcoat Loading (g/in³) | PGM Loading (g/ft³) | Pd: Rh (wt:wt) | Inlet / Outlet | Cellulose (%) | Filtration Efficiency (%) | Particle Number (PN/km) |
|---|---|---|---|---|---|---|---|
| GPF-1 (Comparative) | 1.6 | 30 | 5:1 | 50/50 | 0 | 83.6 | 4.56E+11 |
| GPF-2 | 1.6 | 30 | 5:1 | 80/20 | 0 | 84.7 | 4.26E+11 |

Cold flow backpressures (CFBP) at 600 m³/h, filtration efficiencies at 75s, and NOx conversion measured for GPF-3 to GPF-8 are shown in Table 2.

**TABLE 2**

| Filter | Washcoat Loading (g/in³) | PGM Loading (g/ft³) | Pt: Rh (wt:wt) | Inlet / Outlet | Cellulose (%) | Filtration Efficiency (%) | NOx Conv. (%) | CFBP (mBar) |
|---|---|---|---|---|---|---|---|---|
| GPF-3 (Comparative) | 1.6 | 30 | 5:1 | 50/50 | 0 | 78.1 | 16% | 39.6 |
| GPF-4 (Comparative) | 1.6 | 30 | 5:1 | 80/20 | 0 | 79.7 | | 41.4 |
| GPF-5 | 1.6 | 30 | 5:1 | 50/50 | 12.5 | 91.3 | 28% | 60.1 |
| GPF-6 | 1.6 | 30 | 5:1 | 80/20 | 12.5 | 91.3 | 30% | 52.9 |
| GPF-7 | 1.6 | 30 | 5:1 | 50/50 | 25 | 82.5 | 31% | 65.7 |
| GPF-8 | 1.6 | 30 | 5:1 | 80/20 | 25 | 71.0 | | 46.1 |

Cold flow backpressures (CFBP) at 600 m³/h and filtration efficiencies at 75s measured for GPF-9 to GPF-11 are shown in Table 3.

**TABLE 3**

| Filter | Washcoat Loading (g/in³) | PGM Loading (g/ft³) | Pd: Rh (wt:wt) | Inlet / Outlet | Cellulose (%) | Filtration Efficiency (%) | CFBP (mBar) |
|---|---|---|---|---|---|---|---|
| GPF-9 (Comparative) | 0.8 | 15 | 4:1 | 50/50 | 0 | 65.1 | 32.1 |
| GPF-10 | 0.8 | 15 | 4:1 | 50/50 | 30 | 94.1 | 49.1 |
| GPF-11 | 0.8 | 15 | 4:1 | 80/20 | 30 | 91.5 | 44.8 |

## Claims

1. A washcoat slurry, comprising: a) a platinum group metal selected from the group consisting of Pt, Pd, Rh and mixtures thereof; b) an oxygen storage capacity (OSC) material having a D90 in a range of from 1 to 50 µm; c) an inorganic oxide support; d) an organic pore former; and e) a solvent.

2. The washcoat slurry of claim 1, wherein the organic pore former is selected from the group consisting of cellulose powder, cellulose fibres, polyethylene, starch, graphite, carbon, polypropylene, polyaramides, polytetrafluoroethylene, polystyrene, polymethacryl-methacrylate, and mixtures thereof.

3. The washcoat slurry of claim 1, wherein the organic pore former is a cellulose powder.

4. A method for the manufacture of a gasoline particulate filter (GPF) for the treatment of an exhaust gas, the method comprising:
(i) forming a washcoat slurry comprising: a) a platinum group metal selected from the group consisting of Pt, Pd, Rh and mixtures thereof; b) an oxygen storage capacity (OSC) material having a D90 in a range of from 1 to 50 µm; c) an inorganic oxide support; d) an organic pore former; and e) a solvent;
(ii) coating a wall-flow filter substrate with the washcoat slurry to form a washcoated substrate; and
(iii) calcining the washcoated substrate to form a gasoline particulate filter.

5. The method of claim 4, wherein the OSC material has a D90 in a range of from 3 to 30 µm.

6. The method of claim 4, wherein the inorganic oxide support has a D90 of from 15 to 80 µm.

7. The method of claim 4, wherein the organic pore former is selected from the group consisting of cellulose powder, cellulose fibres, polyethylene, starch, graphite, carbon, polypropylene, polyaramides, polytetrafluoroethylene, polystyrene, polymethacryl-methacrylate, and mixtures thereof.

8. The method of claim 4, wherein the organic pore former has a D50 in a range of from 6 to 12 µm.

9. The method of claim 4, wherein the organic pore former is a cellulose powder.

10. The method of claim 4, wherein the washcoat slurry comprises the organic pore former in an amount of from 10 to 30 wt% relative to the crucible solids in the washcoat slurry.

11. The method of claim 4, wherein the first TWC coating covers 80% to 85% of the length of the first plurality of channels and the second TWC coating covers 20% to 25% of the second plurality of channels.

12. A catalytic gasoline particulate filter (GPF) for exhaust gas from a gasoline engine, the catalytic GPF comprising:
a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
a first TWC coating in the first plurality of channels, the first TWC coating comprising a first PGM composition, a first oxygen storage capacity (OSC) material, and a first inorganic support;
a second TWC coating in the second plurality of channels, the second TWC coating comprising a second PGM composition, a second OSC material, and a second inorganic support;
wherein the first TWC coating is formed by calcining a first washcoat comprising a first organic performer;
wherein the second TWC coating is formed by calcining a second washcoat comprising a second organic performer;
wherein the first TWC coating is coated from the first face;
wherein the second TWC coating is coated from the second face;
wherein the first face is an inlet face and the second face is an outlet face of the catalytic GPF.

13. The GPF of claim 12, where in the washcoat slurry comprises the organic pore former in an amount of from 10 to 30 wt% relative to the crucible solids in the washcoat slurry.

14. The GPF of claim 12, wherein the first TWC coating covers 80% to 85% of the length of the first plurality of channels; and wherein the second TWC coating covers 20% to 25% of the second plurality of channels.

15. An emission treatment system for treating a flow of a combustion exhaust gas from gasoline direct injection engines, the system comprising the gasoline particulate filter (GPF) of claim 12.
